# EUROPÄISCHE PATENTSCHRIFT

(11) **EP 2 465 891 B1**
(45) Veröffentlichungstag und Bekanntmachung des Hinweises auf die Patenterteilung: **07.05.2014**
(21) Anmeldenummer: 11189686.6
(22) Anmeldetag: 18.11.2011
(51) Int. Cl.: C08G 77/46, C08G 18/61, C08G 18/50, C08J 9/00, C08L 75/04, F25D 23/06, F25D 23/08

(54) **Siliconstabilisatoren für Polyurethan- oder Polyisocyanurat-Hartschaumstoffe**
Silicon stabilisers for polyurethane or polyisocyanurate rigid foams
Stabilisateurs à base de silicone pour mousses rigides de polyuréthane ou de polyisocyanurate

(30) Priorität: 16.12.2010 DE 102010063241
(43) Veröffentlichungstag der Anmeldung: 20.06.2012
(73) Patentinhaber: Evonik Degussa GmbH, 45128 Essen (DE)
(72) Erfinder: Glos, Martin, Dr., 46325 Borken (DE); Schiller, Carsten, Dr., 45470 Mülheim an der Ruhr (DE); Eilbracht, Christian, Dr., 44627 Herne (DE)

(56) Entgegenhaltungen:
- EP-A1- 0 533 202
- JP-A- 8 092 404
- JP-A- 2009 185 169
- US-A- 4 529 743

## Beschreibung

Gegenstand der Erfindung sind Polyethersiloxane und deren Verwendung als Schaumstabilisatoren bei der Herstellung von Polyurethan- bzw. Polyisocyanurat-Schaumstoffen, insbesondere Hartschaumstoffen, welche besonders vorteilhafte Gebrauchseigenschaften, wie niedrige Wärmeleitfähigkeit und gute Oberflächenqualität, bieten.

Bei der Herstellung von Polyurethan- und Polyisocyanurat-Hartschaumstoffen werden zellstabilisierende Additive eingesetzt, welche für eine feinzellige, gleichmäßige und störungsarme Schaumstruktur sorgen sollen und damit die Gebrauchseigenschaften, besonders das thermische Isolationsvermögen, des Hartschaumstoffes im wesentlichen Maße positiv beeinflussen. Besonders effektiv sind Tenside auf der Basis von Polyether-modifizierten Siloxanen, welche daher den bevorzugten Typ der Schaumstabilisatoren darstellen.

Da es eine Vielzahl verschiedener Hartschaumformulierungen für unterschiedliche Anwendungsgebiete gibt, die individuelle Anforderungen an den Schaumstabilisator stellen, werden Polyethersiloxane unterschiedlicher Struktur eingesetzt. Eines der Auswahlkriterien für den Schaumstabilisator ist dabei das in der Hartschaumformulierung enthaltene Treibmittel.

Verschiedene Veröffentlichungen bezüglich Polyethersiloxan-Schaumstabilisatoren für Hartschaum-Anwendungen wurden bereits publiziert. Die EP 0 570 174 B1 beschreibt ein Polyethersiloxan der Struktur (CH₃)₃SiO[SiO(CH₃)₂]ₓ [SiO(CH₃)R]_{y}Si(CH₃)₃, dessen Reste R aus einem über eine SiC-Bindung an das Siloxan geknüpften Polyethylenoxid bestehen, welches am anderen Kettenende durch eine C₁-C₆ Acylgruppe endverkappt ist. Dieser Schaumstabilisator eignet sich für die Herstellung von Polyurethan-Hartschäumen unter Verwendung von organischen Treibmitteln, insbesondere Fluorchlorkohlenwasserstoffen wie CFC-11.

Die nächste Generation der sind so genannte Hydrochlorfluorkohlenwasserstoffe, wie z. B. HCFC-123. Bei der Verwendung dieser Treibmittel für die Polyurethan-Hartschaum-Herstellung eignen sich laut EP 0 533 202 A1 Polyethersiloxane des Strukturtyps (CH₃)₃SiO[SiO(CH₃)₂]ₓ[SiO(CH₃)R]_{y}Si(CH₃)₃. Die Reste R bestehen hier aus SiC-gebundenen Polyalkylenoxiden, die aus Propylenoxid und Ethylenoxid zusammengesetzt sind und am Kettenende eine Hydroxy-, Methoxy- oder Acyloxyfunktion aufweisen können. Der Mindestanteil an Ethylenoxid im Polyether beträgt dabei 25 Massenprozent.

Die EP 0 877 045 B1 beschreibt für dieses Herstellverfahren analoge Strukturen, die sich durch ein vergleichsweise höheres Molekulargewicht und durch die Kombination zweier Polyethersubstituenten an der Siloxankette von den erstgenannten Schaumstabilisatoren abheben.

US 4 529 743 A beschreibt ein Verfahren zur Herstellung von Polyurethanhartschäumen unter Einsatz von Polyethersiloxanen hergestellt durch Umsetzung eines Si-H-funktionellen Siloxans mit einer Polyethermischung. JP08092404 A beschreibt Schaumstabilisatoren für flexible Polyurethanschäume, wobei bestimmte Polyethersiloxane eingesetzt werden. JP2009185169 A beschreibt bestimmte Polyether-modifizierte Polyorganosiloxane, die als Hydrophilie-verleihende Mittel, Lipophilie verleihende Mittel, Wasserabweisungsvermögen verleihende Mittel und Ölabweisungsvermögen verleihende Mittel verwendet werden können. Keine der Schriften US 4 529 743 A, JP08092404 A, JP2009185169 A offenbart jedoch Polyethersiloxan-Verbindungen gemäß der in dieser Erfindung verwendeten Formel (I), bei denen im Mittel m = 0 bis 5, n+m+2 = 10 bis 40, x = 3 und y = 5 bis 25 ist.

Bei der Herstellung von Polyurethan-Hartschäumen mit reinen Fluorkohlenwasserstoffen, wie z. B. Freon, als Treibmittel können laut EP 0 293 125 B1 auch Mischungen unterschiedlicher Stabilisatoren verwendet werden, so zum Beispiel die Kombination eines rein organischen (also Sifreien) Tensids mit einem Polyethersiloxan.

Die neuere Entwicklung bei der Herstellung von Polyurethan-Hartschäumen besteht darin, ganz auf halogenierte Kohlenwasserstoffe als Treibmittel zu verzichten und stattdessen Kohlenwasserstoffe wie Pentan einzusetzen. So beschreibt die EP 1 544 235 die Herstellung von Polyurethanhartschäumen unter Verwendung von Kohlenwasserstoff-Treibmitteln und Polyethersiloxanen der bereits bekannten Struktur (CH₃)₃SiO[SiO(CH₃)₂]ₓ[SiO(CH₃)R]_{y}Si (CH₃)₃ mit einer Mindestkettenlänge des Siloxans von 60 Monomereinheiten und unterschiedlichen Polyethersubstituenten R, deren Mischungsmolgewicht 450 bis 1000 g/mol beträgt und deren Ethylenoxidanteil bei 70 bis 100 mol % liegt.

In DE 10 2006 030 531 wird die Verwendung von Polyethersiloxanen, bei denen die Endgruppe der Polyether entweder eine freie OH-Gruppe, eine Alkylether-Gruppe (vorzugsweise Methyl) oder ein Ester ist, als Schaumstabilisatoren beschrieben. Als besonders bevorzugt werden solche Polyethersiloxane verwendet, die freie OH-Funktionen aufweisen.

EP 0254890 beschreibt die Verwendung von Polyethersiloxanen zur Herstellung von hochelastischem Formschaum, wobei das Siloxan maximal 10 Si-Atome enthält und die Endgruppen der Polyether vorzugsweise gemischt OH-Funktionen und Alkoxy-Funktionen tragen. Es werden hier keine Anwendungen für Hartschaum beschrieben.

In US 4014825 werden organomodifizierte Siloxane zur Herstellung von Polyurethanschäumen beschrieben, die neben Alkyl- und Polyether-Substituenten noch Seitenketten tragen mit tertiären OH-Gruppen. Es werden hier also zusätzliche Substituenten eingeführt. Die hier eingesetzten Polyether sind meist Methyl-endverschlossen.

Die in diesen Schriften beschriebenen Schaumstabilisatoren decken jedoch nicht die volle Bandbreite der verschiedenen Hartschaumstoff-Typen ab und in vielen Einsatzgebieten sind Verbesserungen der Schaumstabilisatoren gegenüber dem Stand der Technik wünschenswert, um die Gebrauchseigenschaften der Hartschaumstoffe weiter zu optimieren, insbesondere hinsichtlich der Wärmeleitfähigkeit, der Schaumdefekte an der Oberfläche und der Schaumdefekte an der Oberfläche.

Es besteht deshalb weiterhin die Aufgabe, alternative Schaumstabilisatoren bereitzustellen, die einen oder mehrere der aus dem Stand der Technik bekannten Nachteile nicht aufweisen.

Eine bevorzugte Aufgabe der Erfindung war weiterhin die Entwicklung von Polyurethan- bzw. Polyisocyanurat-Hartschaumstoffen und den ihnen zugrunde liegenden Formulierungen, welche besonders vorteilhafte Gebrauchseigenschaften, wie z. B. niedrige Wärmeleitfähigkeit und/oder gute Oberflächenqualität, bieten.

Überraschenderweise wurde nun gefunden, dass Polyethersiloxane der Formel (I), wie nachfolgend und in den Ansprüchen beschrieben, bei denen 10 bis 90 mol-% der Polyetherreste mit einem Alkylrest oder Carbonylrest verkappt sind bzw. keine OH-Funktion tragen, eine oder mehrere der vorgenannten Aufgaben lösen.

Ein Gegenstand der vorliegenden Erfindung sind deshalb Polyethersiloxane der Formel (I), wie nachfolgend und in den Ansprüchen beschrieben, bei denen 10 bis 90 mol-% der Polyetherreste mit einem Alkylrest (oder Acetylrest) verkappt sind, sowie Gemische davon, und die Verwendung der erfindungsgemäßen Polyethersiloxane zur Herstellung von Polyurethanschaumstoffen oder Polyisocyanuratschaumstoffen.

Ein weiterer Gegenstand der vorliegenden Erfindung ist eine Zusammensetzung, geeignet zur Herstellung von Polyurethan-oder Polyisocyanurat-Hartschaumstoffen, enthaltend zumindest eine Isocyanatkomponente, zumindest eine Polyolkomponente, zumindest einen Schaumstabilisator, zumindest einen Urethan- und/oder Isocyanurat-Katalysatoren, Wasser und/oder Treibmittel, und optional zumindest ein Flammschutzmittel und/oder weitere Additive, welche dadurch gekennzeichnet ist, dass als Schaumstabilisator zumindest ein erfindungsgemäßes Polyethersiloxan enthalten ist, ein Verfahren zur Herstellung von Polyurethan- oder Polyisocyanurat-Hartschaumstoffen, durch Umsetzung dieser Zusammensetzung sowie die dadurch erhältlichen Polyurethan- oder Polyisocyanurat-Hartschaumstoffe.

Außerdem ist Gegenstand der vorliegenden Erfindung die Verwendung von erfindungsgemäßen Polyurethan- oder Polyisocyanurat-Hartschaumstoffen als Dämmplatten und Isolationsmittel sowie eine Kühlapparatur, die als Isoliermaterial einen erfindungsgemäßen Polyurethan- oder Polyisocyanurat-Hartschaumstoff aufweist.

Die erfindungsgemäße Polyethersiloxane haben den Vorteil, dass mit Ihnen Polyurethan- oder Polyisocyanuratschäume, insbesondere Hartschäume hergestellt werden können, die sich durch eine gute Feinzelligkeit und gute Isoliereigenschaften auszeichnen und gleichzeitig wenig Schaumdefekte aufweisen.

Durch die erfindungsgemäßen Polyethersiloxane wird außerdem die Anzahl der Schaumdefekte an oder unter der Oberfläche des Schaums, im Vergleich mit analogen Polyethersiloxanen ohne eine kontrollierte Einstellung der Endgruppenfunktionalität der Polyether, verbessert. Durch die Vermeidung solcher Oberflächenfehler werden die Gebrauchseigenschaften des Endproduktes verbessert, wie beispielsweise die Energeieffizienz eines Kühlschranks oder die Isoliereigenschaften eines Isolierpaneels. Besonders im Bereich der Panelproduktion werden sehr unterschiedliche Materialien als "Beschichtung" verwendet, die flexibel, duktil oder auch hart und spröde sein können. Die Materialien reichen von verschiedenen Papier-Typen, über Kunststofffolien, Metallfolien (Aluminiumfolien), und unterschiedlichste Verbundfolien über Metalldeckschichten aus Stahl, die bereits mechanisch vorgeformt werden müssen, bis zu Holz- oder Gips-Platten, die nicht mehr verformbar sind.

Durch die Verwendung der erfindungsgemäßen Polyethersiloxane werden bei der Verschäumung auf den unterschiedlichen Materialien weniger Oberflächenfehler beobachten als mit Polyethersiloxanen nach dem Stand der Technik.

Die erfindungsgemäßen Polyethersiloxane, Zusammensetzungen und Polyurethanschäume sowie deren Verwendungen werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere bezüglich der in Bezug genommenen Sachverhalte vollständig zum Offenbarungsgehalt der vorliegenden Erfindung gehören. Wenn im nachfolgenden Mittelwerte angegeben sind, so handelt es sich, wenn nicht anders angegeben, um das Zahlenmittel.

Die erfindungsgemäßen Polyethersiloxane der Formel (I),

R-Si(CH₃)₂-O-[-Si(CH₃)₂-O-]ₙ-[-Si(CH₃)R¹-O-]ₘ-Si(CH₃)₂-R²

mit
R, R¹ und R² gleich oder verschieden,
R und/oder R² gleich Methyl oder R¹,
R¹ gleich oder verschieden -(CH₂)ₓ-(O)₂-(CH₂-CHR'(-O)_{y}-R",
R' gleich oder verschieden -H, -CH₃, -CH₂CH₃, oder Phenyl-Rest,
R" gleich oder verschieden -H, -(CO)-R"',-(CO)-NH-R"' oder -Alkyl, vorzugsweise C₁ bis C₄₀-Alkyl, bevorzugt C₁-oder C₆ bis C₃₀-Alkyl,
R"' gleich oder verschieden C₁ bis C₄₀-Alkyl, -Aryl oder - Alkylaryl
n+m+2 = 10 bis 150, vorzugsweise 12 bis 85, besonders bevorzugt 15 bis 47,
   - m: = 0 bis 20, vorzugsweise 1 bis 4,
   - x: = 2 bis 15, vorzugsweise 3 bis 10,
   - y: = 1 bis 40, vorzugsweise 2 bis 19,
   - z: = 0 oder 1,
   wobei die Bausteine (CH₂-CHR'-O) gleich oder unterschiedlich sein können,
   mit der Maßgabe, dass für m = 0 mindestens ein Rest R oder R² gleich R¹ ist,
   und dass für z=0 gilt, dass x und y = 0 sind und R" mindestens 3 Kohlenstoffatome enthält, wobei bei max. 70 mol-%, vorzugsweise 50 mol-% der Reste R¹ im Siloxan z=0 ist,
   oder ein Gemisch davon, dadurch gekennzeichnet, dass im Mittel (Zahlenmittel, gemittelt über alle Verbindungen der Formel (I)) von 10 bis 90 mol-%, vorzugsweise 25 bis 75 mol-%, bevorzugt 40 bis 60 mol-% und besonders bevorzugt 45 bis 55 mol-% der Reste R" keine Wasserstoffreste, sondern vorzugsweise -(CO)-R"',-(CO)-NH-R"' oder -Alkyl, bevorzugt C₁ bis C₄₀-Akylreste und besonders bevorzugt ausschließlich Methylreste, und die verbleibenden Anteile der Reste R" Wasserstoffatome sind, wobei im Mittel
m = 0 bis 5,
n + m + 2 = 10 bis 40,
x = 3 und
y = 5 bis 25 ist.

Der Grad der Endverkappung (Anteil der Reste R" ungleich Wasserstoff) kann durch die bei der Herstellung verwendeten Polyether oder durch die Menge des eingesetzten Verkappungsreagenzes eingestellt werden. Der Grad der Endverkappung kann des weiteren mittels NMR-Methoden bestimmt werden. Vorzugsweise erfolgt die Bestimmung wie nachfolgend beschrieben mit einem NMR-Spektrometer mit Rechnereinheit und Autosampler mit 5 mm Probenkopf der Firma Bruker, Typ 400 MHz, 10 mm QNP unter Verwendung von 5 mm Probenröhrchen und Verschlußkappen aus Plastik, beides von der Firma Norell Inc. Die Probennahme erfolgt mittels Pasteur-Pipetten der Firma Brand. Als Reagenzien werden eingesetzt: Deuterochloroform (CDCl₃) der Firma Deutro, Deuterierungsgrad 99,8 %), Molsieb A3 der Firma Merck (zur Entfernung von Wasserresten aus dem Lösemittel).

Die Messungen werden unter Verwendung der in Tabelle A angegebenen Messparameter durchgeführt:

**Tabelle A: Messparameter für NMR-Messungen**

| | ¹H NMR | ¹³C NMR |
|---|---|---|
| Probenmenge | Ca. 20 mg | Ca. 1 g |
| Volumen CDCl₃ | Ca. 1,25 ml | Ca. 5 ml |
| Senderfrequenz | 399,87 MHz | 100,565 MHz |
| Puls | 8 | 10 |
| Relaxationszeit | 0 sec. | 10 sec. |
| Transmitter Offset | 1350,0 Hz | 11000 Hz |
| Messzeit | 16 | 512 |
| Linienbreite | 0,1 Hz | 1 Hz |

Dazu wird die angegebene Probenmenge in ein sauberes NMR-Röhrchen eingefüllt und mit dem angegebenen Volumen an CDCl₃ versetzt. Das Probenröhrchen wird mit der Plastikkappe verschlossen und die Probe durch Schütteln homogenisiert. Nachdem sich alle Luftbläschen an der Oberfläche abgesetzt haben, wird die Probe im NMR-Spektrometer vermessen. Die Zuordnung der einzelnen Signale ist dem Fachmann geläufig oder kann gegebenenfalls durch Vergleich mit den Signalen geeigneter Beispielsubstanzen erfolgen. Die Auswertung bezüglich der molaren Verhältnisse von freien OH-Gruppen (R"' = H) zu endverkappten OH-Gruppen (R" ungleich H) erfolgt durch das ins Verhältnis setzen der entsprechenden Integrale der Signale, die den jeweiligen Gruppen zugeordnet sind. Um eine Vergleichbarkeit der Signale zu gewährleisten ist dem Fachmann bekannt, sogenannte Beschleuniger den Proben zuzusetzen. Einen geeigneten Beschleuniger kann der Fachmann durch Vermessen von Modellsubstanzen, bei denen das molare Verhältnis bekannt ist, ermitteln. Geeignete Beschleuniger sind solche, bei denen das gemessene Verhältnis vom tatsächlichen Verhältnis um maximal 5 % abweicht. Als Beschleuniger kann z.B. Chromacetylacetonat, welches in Konzentrationen von ca. 0,8 Massen-% bezogen auf die Probenmenge zugegeben wird, verwendet werden.

Erfindungswesentlich für die erfindungsgemäßen Polyethersiloxane ist, dass sich Polyethersubstituenten in der Kammposition (seitenständig) der Siloxankette befinden. Zusätzlich können Polyethersubstituenten an den endständigen Siliciumatomen der Siloxankette vorhanden sein.

Die erfindungsgemäßen Polyethersiloxane der Formel (I) sind Copolymere, die herstellungsbedingt meist polydisperse Verbindungen sind, so dass insbesondere hinsichtlich der Parameter n, m, und y nur Mittelwerte angegeben werden können. Ebenso kann es sich bei den Alkyl-Resten für R" und R"' gegebenenfalls nicht nur um einheitliche Verbindungen, sondern auch um eine Mischung von verschiedenen Kettenlängen handeln wie sie bei der Herstellung von Olefinen oder Carbonsäuren auftreten kann.

Bevorzugte erfindungsgemäße Polyethersiloxane sind solche, bei denen im Mittel (Zahlenmittel, gemittelt über alle Verbindungen der Formel (I)) mindestens 50 mol-% der R' = - H sind.

Besonders bevorzugte Polyethersiloxane sind solche, bei denen der Quotient Q = (n+m)/m größer-gleich 5, bevorzugt größer-gleich 7, besonders bevorzugt größer-gleich 9 und ganz besonders bevorzugt größer-gleich 11 ist.

Desweiteren bevorzugt sind Polyethersiloxane bei denen mindestens ein Rest R oder R² gleich R¹ ist. Vorzugsweise sind im Mittel mindestens 75 mol-%, bevorzugt 90 mol-%, und besonders bevorzugt 100 mol-% der Reste R und R² gleich R¹. Ganz besonders bevorzugte Polyethersiloxane oder Gemische davon sind solche, bei denen mindestens ein Rest R oder R² gleich R¹ ist, vorzugsweise im Mittel mindestens 75 mol-%, bevorzugt 90 mol-%, und besonders bevorzugt 100 mol-% der Reste R und R² gleich R¹ sind und der Quotient Q größer 7 bevorzugt größer als 9 und besonders bevorzugt größer 11 ist.

Erfindungsgemäße Polyethersiloxane sind solche, bei denen im Mittel m gleich 0 bis 5, n+m+2 gleich 10 bis 40, x gleich 3 und y gleich 5 bis 25 ist.

Bei den mit dem Index y bezeichneten Alkylenoxid-Einheiten kann es sich um Ethylenoxid, optional Propylenoxid, optional Butylenoxid und/oder optional Styroloxid in beliebiger Sequenz handeln, wobei der Stoffmengenanteil an Ethylenoxid vorzugsweise mindestens 50 Massen-%, besonders bevorzugt mindestens 90 Massen-%, beträgt.

Die Polyetherreste (R¹) in einem Molekül können untereinander gleich oder verschieden sein, sofern alle Komponenten der Polyethermischung die obige Definition erfüllen. Ferner sind auch Mischungen verschiedener Polyethersiloxane eingeschlossen, sofern entweder die Mittelwerte der Mischung in die o. g. Bereiche fallen oder eine Komponente der obigen Definition entspricht.

Das übliche Verfahren zur Herstellung der erfindungsgemäßen Polyethersiloxan-Schaumstabilisatoren besteht in der Übergangsmetall-katalysierten Hydrosilylierung der olefinisch ungesättigten Polyether mit SiH-funktionellen Siloxanen und ist bekannter Stand der Technik. Die Herstellung von Si-C-verknüpften Polyethersiloxanen wird beispielsweise in EP 1439200, EP 1544235, US 4,147,847, US 4,025,456, EP 0493836 und US 4,855,379 beschrieben. Ein Verfahren zur Hydrosilylierung wird in EP 1 520 870 und darin zitierten Dokumenten beschrieben.

Die Herstellung der erfindungsgemäßen Siloxane kann prinzipiell nach dem bekannten Stand der Technik erfolgen, so z.B. wie in den nachfolgend genannten Dokumenten. In EP 0 493 836 ist die Herstellung von Polyether-modifizierten Siloxanen dargestellt, die in Weichschäumen Verwendung finden. Weitere Beispiele zur Herstellung von entsprechenden Siloxanen sind beispielsweise in US 4,147,847 und US 4,855,379 beschrieben.

Die Herstellung der verwendeten Allylpolyether kann ebenfalls nach dem bekannten Stand der Technik erfolgen. So ist zum Beispiel in EP 1 360 223 und den darin zitierten Dokumenten die Herstellung von olefinischen Polyethern mit und ohne Derivatisierung der OH-Funktionalität beschrieben. US 5877268 (und US 5856369) wird die Herstellung von Allyl-gestarteten Polyethern mit DMC-Katalyse beschrieben.

DE 19940797 beschreibt die Herstellung und Verwendung von Polyalkylenoxiden unter Verwendung von Kaliummethanolat als Katalysator.

In US 3957843 (und US 4059605) wird in Beispielen 1 und 2 die Herstellung von Polyethern mit R' = Methyl und R" = Wasserstoff beschrieben.

US 3507923 beschreibt ein Verfahren zur Herstellung von methylierten Allyl-gestarteten Polyethern unter Verwendung von Methylchlorid.

In DE 102005001076 wird ein technisches Verfahren zur Herstellung von methylierten Polyethern beschrieben.

In DE 3121929 wird die Herstellung von Methyl-AllylPolyethern ausgehend von Methanol-gestarteten Polyethern durch Umsetzung mit Allylchlorid beschrieben.

EP 1927613 beschreibt ein Verfahren zur Veretherung der freien OH-Funktionalität von Polyethern durch Williamson'sche Ethersynthese. In Beispiel 2 wird die Methylierung eines Allyl-gestarteten Polyethers beschrieben.

Zur Herstellung von erfindungsgemäßen Polyethersiloxanen, bei denen in den Polyether-Seitenketten der Anteil an Resten R" gleich oder nicht gleich Wasserstoff ist, gibt es mehrere Möglichkeiten.

Zum einen können bei der Hydrosilylierungsreaktion mehrere (verschiedene) Polyether mit entsprechenden Endgruppen eingesetzt werden. Zum anderen können ein oder mehrere Polyether, die OH-Funktionen tragen, teilweise "Endverkappt" werden durch entsprechende Derivatisierung. Die Derivatisierung der OH-Funktion kann durch Veretherung, Veresterung, etc. erfolgen, soll hierbei aber nur unvollständig durchgeführt werden, um so zu Polyethern zu gelangen, die als Basis für die erfindungsgemäßen Polyethersiloxane dienen können.

Eine weitere Synthesemöglichkeit besteht darin, die Derivatisierung als letzten Schritt in der Herstellung der Polyethersiloxane durchzuführen. Hierbei werden Polyethersiloxana, die Reste vom Typ R " = Wasserstoff tragen einer entsprechenden Derivatisierung unterzogen. Kombinationen der verschiedenen Herstellungswege sind ebenfalls möglich.

Die erfindungsgemäßen Polyethersiloxane können in allen bekannten Anwendungen, bei denen Polyethersiloxane, insbesondere als Stabilisatoren, eingesetzt werden, verwendet werden. Vorzugsweise werden die erfindungsgemäßen Polyethersiloxane zur Herstellung von Polyurethanschaumstoffen, Polyisocyanuratschaumstoffen, insbesondere zur Herstellung von Polyurethan- oder Polyisocyanurat-Hartschaumstoffen verwendet.

Die erfindungsgemäßen Zusammensetzungen, die zur Herstellung von Polyurethan- oder Polyisocyanurat-Hartschaumstoffen geeignet sind, enthalten zumindest eine Isocyanatkomponenten, zumindest eine Polyolkomponente, zumindest einen Schaumstabilisator, zumindest einen Urethan- und/oder Isocyanurat-Katalysatoren, Wasser und/oder Treibmittel, und optional zumindest ein Flammschutzmittel und/oder weitere Additive, und zeichnen sich dadurch aus, dass sie als Schaumstabilisator zumindest ein erfindungsgemäßes Polyethersiloxan bzw. ein Polyethersiloxan-Gemisch, welches erfindungsgemäße Polyethersiloxane aufweist bzw. daraus besteht, enthalten.

In der erfindungsgemäßen Zusammensetzung beträgt der Massenanteil an erfindungsgemäßen Polyethersiloxan (als Schaumstabilisatoren) bezogen auf 100 Massenteile Polyolkomponente (pphp) vorzugsweise von 0,1 bis 10 pphp, bevorzugt von 0,5 bis 5 pphp und besonders bevorzugt von 1 bis 3 pphp.

Geeignete Wasser-Gehalte im Sinne dieser Erfindung hängen davon ab, ob zusätzlich zum Wasser noch ein oder mehrere Treibmittel eingesetzt werden oder nicht. Bei rein Wasser getriebenen Schäumen liegen die Werte typischerweise bei 1 bis 20 pphp, werden zusätzlich andere Treibmittel eingesetzt, verringert sich die Einsatzmenge auf üblicherweise 0,1 bis 5 pphp.

Sind in der erfindungsgemäßen Zusammensetzung zusätzliche Treibmittel können diese physikalische oder chemische Treibmittel sein. Vorzugsweise weist die Zusammensetzung physikalische Treibmittel auf. Geeignete physikalische Treibmittel im Sinne dieser Erfindung sind Gase, beispielsweise verflüssigtes CO₂, und leichtflüchtige Flüssigkeiten, beispielsweise Kohlenwasserstoffe mit 4 bis 5 Kohlenstoff-Atomen, bevorzugt cyclo-, iso- und n-Pentan, Fluorkohlenwasserstoffe, bevorzugt HFC 245fa, HFC 134a und HFC 365mfc, Fluorchlorkohlenwasserstoffe, bevorzugt HCFC 141b, Sauerstoff-haltige Verbindungen wie Methylformiat und Dimethoxymethan, oder Chlorkohlenwasserstoffe, bevorzugt 1,2-Dichlorethan.

Neben oder an Stelle von Wasser und gegebenenfalls physikalischen Treibmitteln können auch andere chemische Treibmittel eingesetzt werden, die mit Isocyanaten unter Gasentwicklung reagieren, wie beispielsweise Ameisensäure.

Als Flammschutzmittel kann die erfindungsgemäße Zusammensetzung alle bekannten und zur Herstellung von Polyurethan- oder Polyisocyanurat-Hartschaumstoffen geeigneten Flammschutzmittel aufweisen. Geeignete Flammschutzmittel im Sinne dieser Erfindung sind bevorzugt flüssige organische Phosphor-Verbindungen, wie halogenfreie organische Phosphate, z.B. Triethylphosphat (TEP), halogenierte Phosphate, z.B. Tris(1-chlor-2-propyl)phosphat (TCPP) und Tris(2-chlorethyl)phosphat (TCEP) und organische Phosphonate, z.B. Dimethylmethanphosphonat (DMMP), Dimethylpropanphosphonat (DMPP), oder Feststoffe wie Ammoniumpolyphosphat (APP) und roter Phosphor. Des Weiteren sind als Flammschutzmittel halogenierte Verbindungen, beispielsweise halogenierte Polyole, sowie Feststoffe, wie Blähgraphit und Melamin, geeignet.

Als Isocyanatkomponente kann die erfindungsgemäße Zusammensetzung alle zur Herstellung von Polyurethan- oder Polyisocyanurat-Hartschaumstoffen geeigneten Isocyanatverbindungen aufweisen. Vorzugsweise weist die erfindungsgemäße Zusammensetzung ein oder mehrere organische Isocyanate mit zwei oder mehr Isocyanat-Funktionen auf. Geeignete Isocyanate im Sinne dieser Erfindung sind alle mehrfunktionalen organischen Isocyanate, wie beispielsweise 4,4'-Diphenylmethandiisocyanat (MDI), Toluoldiisocyanat (TDI), Hexamethylendiisocyanat (HMDI) und Isophorondiisocyanat (IPDI). Besonders geeignet ist das als "polymeres MDI" ("crude MDI") bekannte Gemisch aus MDI und höher kondensierten Analogen mit einer mittleren Funktionalität von 2 bis 4. Beispiele für besonders geeignete Isocyanate sind beispielsweise in EP 1 712 578, EP 1 161 474, WO 00/58383, US 2007/0072951, EP 1 678 232 und der WO 2005/085310 genannt.

Geeignete Polyole im Sinne der vorliegenden Erfindung sind alle organischen Substanzen mit mehreren gegenüber Isocyanaten reaktiven Gruppen sowie deren Zubereitungen. Bevorzugte Polyole sind alle zur Herstellung von Hartschaumstoffen üblicherweise verwendeten Polyetherpolyole und Polyesterpolyole. Polyetherpolyole werden durch Umsetzung von mehrwertigen Alkoholen oder Aminen mit Alkylenoxiden gewonnen. Polyesterpolyole basieren auf Estern mehrwertiger Carbonsäuren (meist Phthalsäure oder Terephthalsäure) mit mehrwertigen Alkoholen (meist Glykolen).

Je nach den geforderten Eigenschaften der resultierenden Schäume können entsprechende Polyole verwendet werden, wie sie beispielsweise beschrieben werden in: US 2007/0072951 A1, WO 2007/111828, US 2007/0238800, US 6,359,022 oder WO 96/12759.

Auch auf Pflanzenöl basierende Polyole können eingesetzt werden. Solche Polyole werden z. B. in WO 2006/094227, WO 2004/096882, US 2002/0103091, WO 2006/116456 und EP 1 678 232 beschrieben.

Das Verhältnis von Isocyanat zu Polyol, ausgedrückt als Index, liegt in der erfindungsgemäßen Zusammensetzung vorzugsweise im Bereich von 80 bis 500, bevorzugt 100 bis 350. Der Index beschreibt dabei das Verhältnis von tatsächlich eingesetztem Isocyanat zu (für eine stöchiometrische Umsetzung mit Polyol) berechnetem Isocyanat. Ein Index von 100 steht für ein molares Verhältnis der reaktiven Gruppen von 1 zu 1.

Je nach Index verändern sich die chemischen Vorgänge in der Verschäumung. Wird mit einem hohen Überschuss an Isocyanat, also einem hohen Index, gearbeitet, kommt es neben der Polyurethanreaktion von Isocyanat mit Polyol auch zur Polyisocyanuratbildung durch Reaktion von Isocyanat-Funktionen untereinander. Daher werden Gemische mit einem höheren Index als Polyisocyanurat-Formulierungen (PIR) und Gemische mit einem niedrigeren Index als Polyurethan-Formulierungen (PUR) bezeichnet. Es gibt hier keinen klaren Übergang so, dass auch die Festlegung von PUR und PIR nicht eindeutig definiert ist. Der Grenzbereich liegt bei Index-Zahlen von 150 bis 200. Formulierungen mit diesen Indexzahlen werden auch als Hybrid-Systeme bezeichnet.

Die erfindungsgemäßen Polyethersiloxane bzw. Mischungen davon können als Additive in beiden (bzw. allen drei) Formulierungen eingesetzt werden.

Als Urethan- und/oder Isocyanurat-Katalysatoren weist die erfindungsgemäße Zusammensetzung einen oder mehrere Katalysatoren für die Reaktionen Isocyanat-Polyol und/oder Isocyanat-Wasser und/oder die Isocyanat-Trimerisierung auf. Geeignete Katalysatoren im Sinne dieser Erfindung sind Substanzen, die die Gelreaktion (Isocyanat-Polyol), die Treibreaktion (Isocyanat-Wasser) und/oder die Di- bzw. Trimerisierung des Isocyanats katalysieren. Typische Beispiele sind die Amine Triethylamin, Dimethylcyclohexylamin, Tetramethylethylendiamin, Tetramethylhexandiamin, Pentamethyldiethylentriamin, Pentamethyldipropylentriamin, Triethylendiamin, Dimethylpiperazin, 1,2-Dimethylimidazol, N-Ethylmorpholin, Tris(dimethylaminopropyl)hexahydro-1,3,5-triazin, Dimethylaminoethanol, Dimethylaminoethoxyethanol und Bis(dimethylaminoethyl)ether, Zinnverbindungen wie Dibutylzinndilaurat und Kaliumsalze wie Kaliumacetat und Kalium-2-ethylhexanoat. Geeignete Katalysatoren sind beispielsweise in EP 1985642, EP 1985644, EP 1977825, US 2008/0234402, EP 0656382 B1 und US 2007/0282026 und den darin zitierten Patentschriften genannt.

Bevorzugte in der erfindungsgemäße Zusammensetzung vorhandene Mengen an Katalysatoren richten sich nach dem Typ des Katalysators und liegen üblicherweise im Bereich von 0,05 bis 5 pphp (= Massenteile bezogen auf 100 Massenteile Polyol) bzw. 0,1 bis 10 pphp für Kaliumsalze.

Eine zusammenfassende Darstellung des Stands der Technik, der verwendeten Rohstoffe und anwendbaren Verfahren findet sich in G. Oertel (Hrsg.): "Kunststoffhandbuch", Band VII, C. Hanser Verlag, München, 1983, in Houben-Weyl: "Methoden der organischen Chemie", Band E20, Thieme Verlag, Stuttgart 1987,(3), Seite 1561 bis 1757, und in "Ullmann's Encyclopedia of Industrial Chemistry" Vol. A21, VCH, Weinheim, 4. Auflage 1992, S. 665 bis 715.

Das erfindungsgemäße Verfahren zur Herstellung von Polyurethan- oder Polyisocyanurat-Hartschaumstoffen, zeichnet sich dadurch aus, dass eine wie oben beschriebene, erfindungsgemäße Zusammensetzung umgesetzt wird. Die Herstellung von Polyurethan- oder Polyisocyanurat-Hartschaumstoffen bzw. die Umsetzung entsprechender Zusammensetzungen kann nach den bekannten Methoden erfolgen. Es kann sich hierbei beispielsweise um kontinuierliche oder diskontinuierliche Prozesse handeln oder es können Hochdruck- oder Niederdruckmaschinen verwendet werden.

Eine bevorzugte Polyurethan- bzw. Polyisocyanurat-Hartschaumformulierung im Sinne dieser Erfindung würde ein Raumgewicht von 20 bis 50 kg/m³ ergeben und hätte die folgende Zusammensetzung:

**Tabelle 1**

| Komponente | Gewichtsanteil |
|---|---|
| Polyol | 100 |
| Amin-Katalysator | 0,05 bis 5 |
| Kalium-Trimerisierungskatalysator | 0 bis 10 |
| Polyethersiloxan der Formel (I) | 0,5 bis 5 |
| Wasser | 0,1 bis 20 |
| Treibmittel | 0 bis 40 |
| Flammschutzmittel | 0 bis 50 |
| | |
| Isocyanat-Index: 80 bis 500 | |

Die Verarbeitung der erfindungsgemäßen Zusammensetzung zu Hartschaumstoffen kann nach allen dem Fachmann geläufigen Verfahren erfolgen, beispielsweise im Handmischverfahren oder bevorzugt mit Hilfe von Hochdruck-Verschäumungsmaschinen. Im Falle von Metallverbundelementen kann die Produktion sowohl diskontinuierlich als auch kontinuierlich im sogenannten Doppelband-Verfahren erfolgen.

Durch das erfindungsgemäße Verfahren sind die erfindungsgemäßen Polyurethan- oder Polyisocyanurat-Hartschaumstoffe erhältlich. Vorzugsweise enthalten die erfindungsgemäßen Polyurethan- oder Polyisocyanurat-Hartschaumstoffe 0,1 bis 10 Massenteile, bevorzugt 0,5 bis 5 Massenteile und besonders bevorzugt von 1 bis 3 Massenteile erfindungsgemäßes Polyethersiloxan bezogen auf 100 Massenteile Polyolkomponente in gebundener und/oder ungebundener Form.

Die erfindungsgemäßen Polyurethan- oder Polyisocyanurat-Hartschaumstoffe können als oder zur Herstellung von Dämmplatten und Isolationsmittel bzw. Isoliermaterialien verwendet werden. Auf diese Weise sind Kühlapparaturen, wie z. B. Kühl- oder Gefrierschränke, zugänglich, die sich dadurch auszeichnen, dass sie als Isoliermaterial einen erfindungsgemäßen Polyurethan- oder Polyisocyanurat-Hartschaumstoff aufweisen.

Ein weiteres wichtiges Einsatzgebiet für Polyurethan- bzw. Polyisocyanurat-Hartschaumstoffe stellen Dämmplatten mit flexiblen Deckschichten (wie z.B. Aluminium beschichtetes Papier) dar, welche zur Wärmedämmung beim Bau von Häusern und Gebäuden eingesetzt werden. Daneben gibt es auch Verbundelemente, bestehend aus einem Hartschaum-Kern und festen metallischen Deckschichten (z.B. Stahlblech), welche als Konstruktionselemente ebenfalls im Bausektor eingesetzt werden.

Nachfolgend werden einige besonders bevorzugte Anwendungen beschrieben, ohne dass der Gegenstand der Erfindung auf diese beschränkt sein soll.

In einer bevorzugten Ausführungform der vorliegenden Erfindung werden die erfindungsgemäßen Zusammensetzungen als PUR Formulierungen (Index kleiner 200) eingesetzt, die bei der Verschäumung in einem diskontinuierlichen Prozess in einer Form verwendet werden. Oftmals sind diese Formen so dimensioniert, dass die schäumende Mischung lange Fließwege hat und dadurch die Anfälligkeit für Schaumstörungen steigt. Hier kann bei der Verwendung der erfindungsgemäßen Zusammensetzungen die Anfälligkeit für Schaumstörungen minimiert werden.

Bevorzugt werden die erfindungsgemäßen Zusammensetzungen bei der Herstellung von Kühlschränken oder anderen Kühlaggregaten eingesetzt. Hierbei wird in einem diskontinuierlichen Prozess die schäumende Mischung in das sogenannte Kabinett injiziert und muss dort den zur Verfügung stehenden Raum ausfüllen. Hierbei ist der Schaum einem Fließstress unterzogen, was die Gefahr der Fehlerbildung erhöht. Zusätzlich spielen die verwendeten Materialien eine wichtige Rolle. Der Inliner besteht meist aus Kunststoff und die Außenhülle des Kühlschranks aus einer Metalldeckschicht. Hier darf es zu keinen Schaumfehlern kommen, die aus der Wechselwirkung mit diesen Materialien oder eventuell darauf befindlichen Verschmutzungen herrühren. Die erfindungsgemäßen Zusammensetzungen zeigen hier eine überlegene Fähigkeit Schaumfehler unter diesen Bedingungen zu unterdrücken. Dadurch erhält man auch bei der Verwendung von dünnen Deckschichten, wie z. B. Metalldeckschichten und/oder Kunststoffdeckschichten, eine glatte Oberfläche des Kühlschranks, da die Neigung zur Fehlerbildung an der Grenzschicht unterdrückt ist. Die Kunststoffdeckschichten können z. B. Polypropylen, Polyethylen oder (High Impact Polystyrene) HIPS-Deckschichten sein.

In einer weiteren bevorzugten Ausführungform der vorliegenden Erfindung werden die erfindungsgemäßen Zusammensetzungen bei der Herstellung von Verbundelementen eingesetzt. Hierbei wird in einem diskontinuierlichen Prozess die zu schäumende Zusammensetzung zwischen zwei Deckschichten injiziert. Hierbei können sowohl PUR- als auch PIR-Formulierungen verwendet werden. Als Deckschichten kommen verschiedene Materialien in Frage. Meist sind es Metalldeckschichten zur Herstellung von Metallverbundelementen, die dann in der Bauindustrie Verwendung finden. Es können aber auch auf einer oder beiden Seiten Kunststoffdeckschichten eingesetzt werden. Die so erhaltenen Verbundelemente, oft auch Paneele genannt, können Verwendung in diversen Bereichen wie der Bauindustrie (Fassaden), im Automobilbereich (Caravanbereich), dem Messebau (Leichtbauwände) oder der Möbelherstellung finden. Besonders bei der beidseitigen Verwendung von Kunststoffdeckschichten können hierbei sehr leichte Verbundelemente hergestellt werden. Als Deckschichten können beispielsweise folgende Materialien eingesetzt werden: PMMA (Polymethylmethacrylat), HIPS (High Impact Polystyrene), PP (Polypropylen), Resopal, faserverstärkte Papier-Typen. Besondere Probleme können hier von Beschichtungen auf den Metalldeckschichten oder Prozesshilfsmitteln (Trennmittel) auf Kunststoffoberflächen ausgehen, die für die Ausbildung des Schaums nachteilig sein können. Generell zeigen hier die erfindungsgemäßen Zusammensetzungen Vorteile bei den Oberflächenqualitäten, da weniger Schaumfehler auftreten als bei Verwendung von Siloxanen nach dem bisherigen Stand der Technik. Zusätzlich zu den ästhetischen Aspekten kann auch die Haftung der Deckschichten auf dem Schaum verbessert werden.

In einer weiteren bevorzugten Ausführungsform werden die erfindungsgemäßen Zusammensetzungen (bzw. die erfindungsgemäße Polyethersiloxane) bei der kontinuierlichen Herstellung von Polyurethan oder Polyisocyanurat basierenden Metall-Paneelen verwendet. Hierbei wird in einem Doppelbandlaminator bei Bandgeschwindikeiten von maximal 25 m/min über einen traversierenden Mischkopf die schäumende Mischung auf die untere Metallschicht aufgetragen. Oftmals sind die Metalldeckschichten hierbei profiliert. Im Laminator erreicht dann die aufsteigende Mischung die obere Deckschicht wodurch ein kontinuierlich gebildetes Metallpaneel entsteht, welches am Austrittsende des Laminators in die gewünschte Länge geschnitten wird.

Hierbei muss die schäumende Mischung die oftmals profilierten Deckschichten komplett bedecken und den Raum zwischen den Deckschichten komplett ausfüllen. In den meisten Fällen wird hier die schäumende Mischung aus einem Mischkopf dosiert an dem sich eine sogenannte Giessharfe befinden kann. Mit einer Giessharfe wird die Mischung aus mehreren Öffnungen entlang der Bandrichtung ausgetragen. Um eine gleichmäßige Schaumverteilung über die Breite des Paneels zu erhalten, wird der Mischkopf traversierend über die Breite des Panels bewegt. Eine weiter Aufgabenstellung besteht hier in der Vermeidung von Oberflächendefekten, die hier von Beschichtungen auf den Metalldeckschichten (Coil Coatings) herrühren können, da diese oftmals Entschäumer enthalten, die für den Schaum bzw. die Schaumbildung schädlich sein können. Generell zeigen hier die erfindungsgemäßen Zusammensetzungen Vorteile bei den Oberflächenqualitäten, da weniger Schaumfehler auftreten als bei Verwendung von Polyethersiloxanen nach dem bisherigen Stand der Technik.

In einer weiteren bevorzugten Ausführungsform werden die erfindungsgemäßen Zusammensetzungen (Siloxane) bei der kontinuierlichen Herstellung von Polyurethan oder Polyisocyanurat basierenden Paneelen mit flexiblen Deckschichten verwendet. Hierbei wird in einem Doppelbandlaminator bei Bandgeschwindigkeiten von maximal 45 m/min über einen über mehrere Mischköpfe die schäumende Mischung auf die untere Deckschicht aufgetragen. Im Laminator erreicht dann die aufsteigende Mischung die obere Deckschicht wodurch ein kontinuierlich gebildetes Paneel entsteht, welches am Austrittsende des Laminatores in die gewünschte Länge geschnitten wird.

Es können hierbei ein Vielzahl an verschiedenen Deckschichten eingesetzt werden, wie beispielsweise Papier, Aluminium, Bitumen, Faservliese, Mehrschichtfolien aus diversen Materialien, etc.

Hierbei muss die schäumende Mischung aufgrund der höheren Bandgeschwindigkeiten in kurzer Zeit möglichst gleichmäßig verfließen, damit ein homogener Schaum ohne Verdichtungen und unregelmäßige Zellgrößenverteilung entstehen kann. Aufgrund der hohen Austragsmengen, die hier benötigt werden, können hierbei auch Anlagen verwendet werden mit mehr als einem Mischkopf, wobei dann die schäumende Mischung in mehreren Strängen auf den Laminator ausgetragen wird. Dieser Prozess wird auch als "finger lay down" bezeichnet.

Die sehr unterschiedlichen Materialseigenschaften der Deckschichten stellen eine zusätzliche Herausforderung dar, da hier je nach Material Probleme auftreten können, wie beispielsweise Entschäumungseffekte durch Kontaminationen auf den Deckschichten, schlechte Haftung, erhöhter Fließstress bei sehr rauhen Oberflächen. Hier steht die Vermeidung von Oberflächendefekten im Vordergrund. Generell zeigen hier die erfindungsgemäßen Zusammensetzungen Vorteile bei den Oberflächenqualitäten, da weniger Schaumfehler auftreten als bei Verwendung von Polyethersiloxanen nach dem bisherigen Stand der Technik. Die vorliegende Erfindung wird an Hand der Figuren Fig. 1 bis Fig. 7 näher erläutert ohne darauf beschränkt zu sein. Die Figuren zeigen Fotos der Schaumoberflächen nach Entfernung eines ca. 5 x 20 cm großen Stahlblechs von einigen der in Beispiel 2b hergestellten Schäume. Fig. 1 zeigt die Oberfläche gemäß Vgl. 3, Fig. 2 zeigt die Oberfläche gemäß Vgl. 4, Fig. 3 zeigt die Oberfläche gemäß Versuch 10, Fig. 4 zeigt die Oberfläche gemäß Versuch 11, Fig. 5 zeigt die Oberfläche gemäß Versuch 12, Fig. 6 zeigt die Oberfläche gemäß Versuch 13 und Fig. 7 zeigt die Oberfläche gemäß Versuch 14.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

### Beispiele:

### Beispiel 1: Herstellung erfindungsgemäßer Polyethersiloxane

Die einzusetzenden Si-H-funktionellen Siloxan wurden wie in Beispiel 1 der Schrift EP 1439200 aus den entsprechenden Siloxan-Rohstoffen durch Äquilibrierung hergestellt (Für die Herstellung von Siloxanen mit endständiger Modifizierung muss entsprechend ein Polymethylwasserstoffsiloxan mit endständigem Wasserstoff-Funktionalität als Rohstoff verwendet werden.). Die Art und Menge der Rohstoffe wurde so gewählt, dass die jeweils gewünschte Siloxanstruktur erhalten wurde.

Die Herstellung der Allyl-Polyether erfolgte analog zu der in Beispiel 1 der Schrift DE 19940797 beschriebenen Methode, wobei hier Allylalkohol als Starter und entsprechend Ethylenoxid und Propylenoxid oder Styroloxid verwendet wurden.

Die eingesetzten Allyl-gestarteten Polyether wurden nach dem in DE 102005001076 beschriebenen Verfahren durch Umsetzung mit Methylchlorid verethert (Endverkappung).

Die Hydrosilylierungsreaktionen (Umsetzungen der Si-H-funktionellen Siloxane mit den Allylpolyethern) wurden entsprechend dem Beispiel 1 in der Schrift EP 1 520 870 durchgeführt.

In Tabelle 2 sind die verwendeten Strukturen der modifizierenden Reste R¹ zusammengefasst.

Tabelle 3 beschreibt die erfindungsgemäßen Siloxane. Es wurden die in Formel (I) verwendeten Bezeichnungen und Indices verwendet. Alle % -Angaben in Tabelle 2 und Tabelle 3 sind mol-%.

**Tabelle 2: Beschreibung der Seitenketten R¹**

| R¹ | R' | R" | R'" | x | y | Z |
|---|---|---|---|---|---|---|
| A | 35 % Me; 65 % H | H | - | 3 | 23 | 1 |
| B | 38 % Me; 68 % H | Me | - | 3 | 23 | 1 |
| C | 20 % Me; 80 % H | Me | - | 3 | 17 | 1 |
| D | 100 % H | Me | - | 3 | 13 | 1 |
| E | 25 % Me; 75 % H | H | - | 3 | 13 | 1 |
| F | 100 % H | Me | - | 3 | 10 | 1 |
| G | 20 % Me; 80 % H | Me | - | 3 | 25 | 1 |
| H | 52 % Me; 48 % H | Me | - | 3 | 27 | 1 |
| I | 45 % Me; 55 % H | Me | - | 3 | 29 | 1 |
| K | 13 % Me; 87 % H | Me | - | 3 | 11,5 | 1 |
| L | 20 % Me; 80 % H | H | - | 3 | 26 | 1 |
| M | 17 % Me; 83 % H | Me | - | 3 | 29 | 1 |
| N | | C₁₆H₃₃ | - | 0 | 0 | 0 |
| O | 18 % Me%; 82 % H | (CO)-R"' | Me | 3 | 24,5 | 1 |
| P | 20 % Me; 20 %Et; 60 % H | Me | - | 3 | 23 | 1 |
| Q | 20 % Me; 20 %Ph; 60 % H | Me | - | 3 | 21 | 1 |

| | | | | | | |
|---|---|---|---|---|---|---|
| Me = Methyl, Et = Ethyl, Ph = Phenyl | | | | | | |

Auf Basis der in Tabelle 2 beschriebenen Seitenketten R¹ mit den Bezeichnungen A bis Q wurden die in Tabelle 3 zusammengefassten Siloxane hergestellt.

**Tabelle 3: Beschreibung der Siloxane nach Formel (I)**

| Siloxan | R | R² | R¹ | n | m |
|---|---|---|---|---|---|
| 1 | R¹ | R¹ | 50 % A; 50 % B | 40 | 4 |
| 2 | R¹ | R¹ | 50 % D ;50 % E | 40 | 4 |
| 3 erfindungsgemäß | Me | Me | 50 % A; 50 % G | 25 | 2 |
| 4 erfindungsgemäß | Me | Me | 50 % A; 50 % B | 20 | 1,5 |
| 5 erfindungsgemäß | R¹ | R¹ | 70 % D; 30 % E | 20 | 0,5 |
| 6 | R¹ | R¹ | 70 % D; 30 % L | 42 | 2 |
| 7 | Me | Me | 70 % C; 30 % E | 52 | 8 |
| 8 | Me | Me | 75 % F; 25 % L | 55 | 7 |
| 9 erfindungsgemäß | Me | Me | 60 % K; 20 % H; 20 % L | 20 | 3 |
| 10 | Me | Me | 60 % I; 20 % 0; 20 % L | 40 | 7 |
| 11 | R¹ | R¹ | 75 % M; 25 % L | 130 | 10 |
| 12 | R¹ | R¹ | 50 % L; 30 % G; 20 % N | 60 | 8 |
| 13 | Me | Me | 60 % O; 20 % H; 20 % L | 75 | 5 |
| 14 erfindungsgemäß | Me | Me | 50 % A; 50 % Q | 25 | 2 |
| 15 erfindungsgemäß | R¹ | R¹ | 50 % A; 50 % P | 25 | 2 |

### Beispiel 2: Anwendung der Polyethersiloxane in der Verschäumung

Die anwendungstechnischen Vorteile gegenüber dem Stand der Technik, die der Einsatz der erfindungsgemäßen Polyethersiloxane in Hartschaum-Formulierungen ermöglicht, werden anhand der nachfolgenden Anwendungsbeispielen aufgezeigt.

Die Durchführung der Verschäumungen erfolgte im Handmischverfahren. Dazu wurden Polyol, Flammschutzmittel, Katalysatoren, Wasser, konventioneller bzw. erfindungsgemäßer Schaumstabilisator und Treibmittel in einen Becher eingewogen und mit einem Tellerrührer (6 cm Durchmesser) 30 s bei 1000 Upm vermischt. Durch erneutes Abwiegen wurde die beim Mischvorgang verdunstete Treibmittelmenge bestimmt und wieder ergänzt. Jetzt wurde das Isocyanat (MDI) zugegeben, die Reaktionsmischung mit dem beschriebenen Rührer 5 s bei 3000 Upm verrührt und sofort in eine thermostatisierte Aluminiumform überführt, welche mit Polyethylenfolie ausgekleidet war. Formtemperatur und Geometrie variierten dabei je nach Schaumformulierung. Die Einsatzmenge (Basis waren ca. 100g Polyol) an Schaumformulierung war dabei so bemessen, dass der daraus entstehende Schaum um 15 % über der zur Mindestbefüllung der Form notwendigen Menge lag.

Einen Tag nach der Verschäumung wurden die Schaumstoffe analysiert. Oberfläche und Innenstörungen wurden subjektiv anhand einer Skala von 1 bis 10 beurteilt, wobei 10 einen ungestörten Schaum und 1 einen extrem stark gestörten Schaum repräsentiert. Die Porenstruktur (mittlere Zahl der Zellen pro 1 cm) wurde auf einer Schnittfläche optisch durch Vergleich mit Vergleichsschäumen beurteilt. Die Wärmeleitzahl wurde an 2,5 cm dicken Scheiben mit einem Gerät vom Typ Hesto Lambda Control bei Temperaturen an Probenunter- und -oberseite von 10°C und 36°C gemessen. Der prozentuale Volumenanteil an geschlossenen Zellen wurde mit einem Gerät vom Typ AccuPyc 1330 der Firma Micromeritics, basierend auf dem Prinzip der Gasverdrängung, bestimmt. Die Stauchhärten der Schaumstoffe wurden an würfelförmigen Probekörpern mit 5 cm Kantenlänge nach DIN 53421 bis zu einer Stauchung von 10% gemessen (angegeben ist die in diesem Messbereich maximal aufgetretene Druckspannung).

### Beispiel 2a: PUR-Hartschaumsystem für Isolation von Kühlmöbeln

Es wurde eine für dieses Einsatzgebiet abgestimmte Formulierung gemäß Tabelle 4 verwendet, die jeweils mit erfindungsgemäßen Polyethersiloxan-Schaumstabilisatoren aus Beispiel 1 (Bezeichnung siehe Tabelle 3) und zwei nicht erfindungsgemäßen Polyethersiloxan-Schaumstabilisatoren (Tegostab B 1048, ein vollständig Butyl-verkapptes Polyethersiloxan, und Tegostab B 8408, ein unverkapptes, also ausschließlich OH-Gruppen aufweisendes Polyethersiloxan, der Firma Evonik Goldschmidt GmbH) verschäumt wurde. Dabei wurde die Reaktionsmischung in eine auf 45°C thermostatisierte Aluminiumform von 145 cm x 14,5 cm x 3,5 cm Größe eingetragen.

**Tabelle 4: Formulierung Kühlschrank-Isolation**

| **Komponente** | **Gewichtsanteil** |
|---|---|
| Daltolac R 471* | 100 Teile |
| N,N-Dimethylcyclohexylamin | 1,5 Teile |
| Wasser | 2,6 Teile |
| cyclo-Pentan | 13,1 Teile |
| Polyethersiloxan | 1,5 Teile |
| Desmodur 44V20L** | 198,5 Teile |

| | |
|---|---|
| * Polyetherpolyol der Firma Huntsman ** polymeres MDI der Firma Bayer; 200 mPa*s; 31,5% NCO; Funktionalität 2,7. | |

Die in Tabelle 5 dargestellten Ergebnisse zeigen, dass die erfindungsgemäßen Polyethersiloxane 3, 5 und 9 durchweg niedrigere Wärmeleitfähigkeiten ermöglichen als die beiden nicht erfindungsgemäßen Vergleichs-Stabilisatoren. Bei den Siloxanen 2,5,8 und 9 ist außerdem die Schaumoberfläche weniger stark gestört als bei den Vergleichsstabilisatoren.

**Tabelle 5: Ergebnisse zu Kühlschrank-Isolation**

| **Versuch** | **Siloxan** | **Defekte (1-10) oben/unten /innen** | **Zellen/cm** | **λ-wert / mW/m*K** | **Geschlossenzelligkeit / %** |
|---|---|---|---|---|---|
| Vgl.1 | B 1048* | 7/6/7 | 40-44 | 22,6 | 93 |
| Vgl.2 | B 8408* | 7/6/6 | 35-39 | 23,1 | 91 |
| 1 | 1 | 7/8/7 | 40-44 | 22,1 | 94 |
| 2 | 2 | 8/7/8 | 40-44 | 22,0 | 93 |
| 3 | 3 erfindungsgemäß | 7/8/8 | 40-44 | 21,8 | 94 |
| 4 | 5 erfindungsgemäß | 8/7/7 | 40-44 | 21,9 | 92 |
| 5 | 6 | 7/8/9 | 45-50 | 21,8 | 92 |
| 6 | 7 | 7/8/7 | 40-44 | 22,0 | 92 |
| 7 | 8 | 8/7/7 | 40-44 | 22,1 | 94 |
| 8 | 9 erfindungsgemäß | 8/7/7 | 40-44 | 21,9 | 93 |
| 9 | 10 | 7/8/9 | 45-50 | 22,1 | 92 |

| | | | | | |
|---|---|---|---|---|---|
| * nicht erfindungsgemäße Vergleichsbeispiele; TEGOSTAB B 1048 und TEGOSTAB B 8408 sind Polyethersiloxan-Schaumstabilisatoren der Firma Evonik Goldschmidt GmbH | | | | | |

### Beispiel 2b: PUR-Hartschaumsystem für Metallverbundelemente

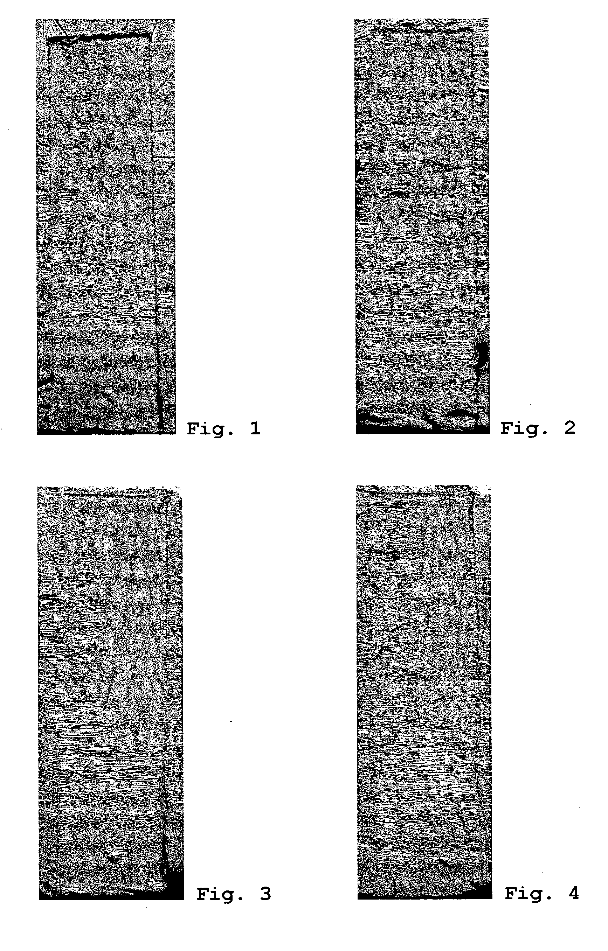

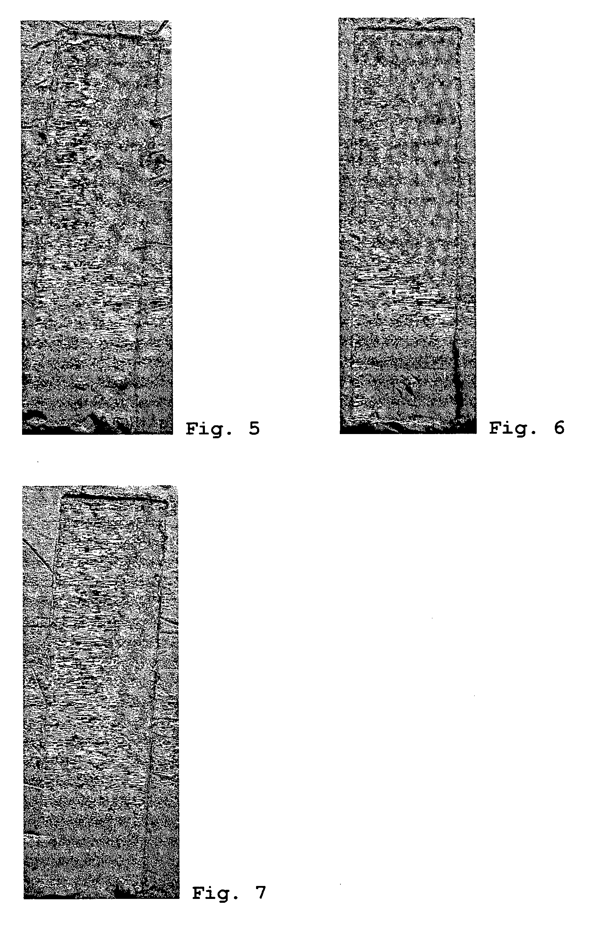

Es wurde eine für dieses Einsatzgebiet abgestimmte Formulierung verwendet (siehe Tabelle 6), die jeweils mit einem erfindungsgemäßen Polyethersiloxan-Schaumstabilisator (Bezeichnung gemäß Tabelle 3) und zwei nicht erfindungsgemäßen Polyethersiloxan-Schaumstabilisatoren (Tegostab B 8443, ein ausschließlich Methylether-Gruppen aufweisendes Polyethersiloxan, und Tegostab B 8486, ein ausschließlich OH-Gruppen aufweisendes Polyethersiloxan, der Firma Evonik Goldschmidt GmbH) verschäumt wurde. Dabei wurde die Reaktionsmischung in eine auf 40 °C thermostatisierte Aluminiumform von 50 cm x 50 cm x 5 cm Größe eingetragen, die zuvor mit Polyethylen-Folien ausgeschalgen wurde und in die dann auf den Boden eine Stahlblech-Deckschicht eingelegt wurde. Am Folgetag wurde das Blech vom Schaum abgezogen und der Schaum anschließend beurteilt. Für die Herstellung der Fotos (Fig. 1 bis Fig. 7) wurden die Versuche wiederholt, aber an Stelle der 50 cm x 50 cm Stahlblechdeckschicht wurde nur ein 20 cm x 5 cm großer Blechstreifen verwendet.

**Tabelle 6: Formulierungen zu Metallverbundelement**

| **Komponente** | **Gewichtsanteil** |
|---|---|
| Polyetherpolyol-Blend | 70 Teile |
| Tris(1-chlor-2-propyl)phosphat | 30 Teile |
| N,N,N',N",N"-Pentamethyldiethylentriamin | 0,2 Teile |
| N,N-Dimethylcyclohexylamin | 2,0 Teile |
| Wasser | 2,5 Teile |
| n-Pentan | 6,0 Teile |
| Polyethersiloxan | 2,0 Teile |
| | |
| Desmodur 44V20L** | 140 Teile |

| | |
|---|---|
| ** polymeres MDI der Firma Bayer, 200 mPa*s, 31,5% NCO, Funktionalität 2,7 | |

Die in Tabelle 7 dargestellten Ergebnisse zeigen, dass die erfindungsgemäßen Polyethersiloxane 3 bis 5 sowie 9, 14 und 15 wiederum niedrigere Wärmeleitfähigkeiten bieten, als die beiden nicht erfindungsgemäßen Vergleichs-Stabilisatoren. Nach dem Abziehen der Stahlblech-Deckschicht von der Schaumunterseite werden die darunterliegenden Schaumdefekte sichtbar (Fig. 1 bis 7). Die erfindungsgemäßen Polyethersiloxane zeigen eine deutliche Reduktion der Lunkerbildung und bieten folglich eine bessere Oberflächenqualität als die Vergleichsprodukte.

**Tabelle 7: Ergebnisse zu Metallverbundelement**

| **Versuch** | **Siloxan** | **Defekte (1-10) oben/unten /innen** | **Zellen /cm** | **λ-wert / mW/m*K** | **Geschlossenzelligkeit / %** |
|---|---|---|---|---|---|
| Vgl.3 | B 8443* | 7/5**/8 | 45-50 | 22,3 | 94 |
| Vgl.4 | B 8486* | 7/4**/7 | 40-44 | 23,0 | 93 |
| 10 | 1 | 7/9**/8 | 45-50 | 21,9 | 94 |
| 11 | 2 | 7/8**/8 | 45-50 | 22,0 | 92 |
| 12 | 3 erfindungsgemäß | 7/8**/7 | 45-50 | 21,8 | 94 |
| 13 | 4 erfindungsgemäß | 8/9**/7 | 45-50 | 21,8 | 94 |
| 14 | 5 erfindungsgemäß | 8/8**/8 | 45-50 | 22,0 | 93 |
| 15 | 6 | 7/8/7 | 45-50 | 21,9 | 94 |
| 16 | 7 | 7/7/8 | 45-50 | 22,1 | 92 |
| 17 | 8 | 7/8/7 | 45-50 | 21,8 | 93 |
| 18 | 9 erfindungsgemäß | 7/7/8 | 45-50 | 21,8 | 94 |
| 19 | 10 | 7/7/7 | 45-50 | 22,0 | 92 |
| 20 | 12 | 7/8/8 | 45-50 | 22,0 | 94 |
| 21 | 14 erfindungsgemäß | 7/8/7 | 45-60 | 21,9 | 93 |
| 22 | 15 erfindungsgemäß | 8/7/7 | 45-50 | 21,9 | 94 |

| | | | | | |
|---|---|---|---|---|---|
| * nicht erfindungsgemäße Vergleichsbeispiele; TEGOSTAB B 8443 und TEGOSTAB B 8486 sind Polyethersiloxan-Schaumstabilisatoren der Firma Evonik Goldschmidt GmbH ** die Schaumqualität der Unterseite nach Abziehen des Blechs zeigen die Figuren Fig. 1 bis Fig. 7 (für die Fotos wurden nur 5 cm breite Metall-Streifen von den Schäumen abgezogen). Fig. 1 zeigt die Oberfläche gemäß Vgl. 3, Fig. 2 zeigt die Oberfläche gemäß Vgl. 4, Fig. 3 zeigt die Oberfläche gemäß Versuch 10, Fig. 4 zeigt die Oberfläche gemäß Versuch 11, Fig. 5 zeigt die Oberfläche gemäß Versuch 12, Fig. 6 zeigt die Oberfläche gemäß Versuch 13 und Fig. 7 zeigt die Oberfläche gemäß Versuch 14. | | | | | |

### Beispiel 2c: PIR-Hartschaumsystem für Dämmplatte

Es wurde eine für dieses Einsatzgebiet abgestimmte Formulierung verwendet (siehe Tabelle 8), die mit mehreren erfindungsgemäßen Polyethersiloxan-Schaumstabilisator (Bezeichnung gemäß Tabelle 3) und zwei nicht erfindungsgemäßen Polyethersiloxan-Schaumstabilisatoren (Tegostab B 1048 und Tegostab B 8466 der Firma Evonik Goldschmidt GmbH) verschäumt wurde. Dabei wurde die Reaktionsmischung in eine auf 50°C thermostatisierte Aluminiumform von 50 cm x 25 cm x 5 cm Größe eingetragen.

**Tabelle 8: Formulierungen zu Dämmplatte**

| **Komponente** | **Gewichtsanteil** |
|---|---|
| Stepanpol PS 2352* | 100 Teile |
| Tris(1-chlor-2-propyl)phosphat | 15 Teile |
| N,N,N',N",N"-Pentamethyldiethylentriamin | 0,2 Teile |
| Kaliumoctoat (75 Gew.-% in Diethylenglycol) | 4, 0 Teile |
| Wasser | 0,4 Teile |
| n-Pentan | 20 Teile |
| Polyethersiloxan | 2, 0 Teile |
| | |
| Desmodur 44V20L** | 200 Teile |

| | |
|---|---|
| * Polyesterpolyol der Firma Stepan ** polymeres MDI der Firma Bayer, 200 mPa*s, 31,5% NCO, Funktionalität 2,7 | |

Die in Tabelle 9 dargestellten Ergebnisse zeigen abermals, dass die erfindungsgemäßen Polyethersiloxane 3 bis 5 sowie 9, 14 und 15 niedrigere Wärmeleitfähigkeiten und eine bessere Schaumqualität an der Unterseite ermöglichen als die nicht erfindungsgemäßen Vergleichsprodukte.

**Tabelle 9: Ergebnisse zu Dämmplatte**

| **Versuch** | **Siloxan** | **Defekte (1-10) oben/unten/innen** | **Zellen /cm** | **λ-Wert / mW/m*K** | **Geschlossenzelligkeit / %** |
|---|---|---|---|---|---|
| Vgl.5 | B 1048* | 6/7/8 | 40-45 | 23,0 | 92 |
| Vgl.6 | B 8466* | 6/7/8 | 45-50 | 22,8 | 94 |
| 23 | 1 | 7/8/8 | 45-50 | 22,3 | 93 |
| 24 | 2 | 8/8/8 | 45-50 | 22,5 | 93 |
| 25 | 3 erfindungsgemäß | 7/8/8 | 45-50 | 22,2 | 92 |
| 26 | 4 erfindungsgemäß | 7/8/7 | 45-50 | 22,3 | 94 |
| 27 | 5 erfindungsgemäß | 8/8/8 | 45-50 | 22,4 | 93 |
| 28 | 6 | 8/7/8 | 45-50 | 22,3 | 92 |
| 29 | 9 erfindungsgemäß | 7/8/7 | 45-50 | 22,4 | 94 |
| 30 | 11 | 6/9/7 | 45-50 | 22,5 | 92 |
| 31 | 12 | 7/9/7 | 45-50 | 22,5 | 93 |
| 32 | 13 | 8/8/7 | 45-50 | 22,3 | 92 |
| 33 | 14 erfindungsgemäß | 7/8/7 | 45-50 | 22,5 | 94 |
| 34 | 15 erfindungsgemäß | 8/7/7 | 45-50 | 22,4 | 93 |

| | | | | | |
|---|---|---|---|---|---|
| * nicht erfindungsgemäße Vergleichsbeispiele; TEGOSTAB B 1048 und TEGOSTAB B 8466 sind Polyethersiloxan-Schaumstabilisatoren der Firma Evonik Goldschmidt GmbH | | | | | |

## Patentansprüche

1. Polyethersiloxane der Formel (I),
R-Si(CH₃)₂-O-[-Si(CH₃)₂-O-]ₙ-[-Si(CH₃)R¹-O-]ₘ-Si(CH₃)₂-R²
mit
R, R¹ und R² gleich oder verschieden,
R und/oder R² gleich Methyl oder R¹,
R¹ gleich oder verschieden -(CH₂)ₓ-(O)_{z}-(CH₂-CHR'-O)_{y}-R",
R' gleich oder verschieden -H, -CH₃, -CH₂CH₃, oder Phenyl-Rest,
R" gleich oder verschieden -H, -(CO)-R'",-(CO)-NH-R"' oder -Alkyl,
R"' gleich oder verschieden C₁ bis C₄₀-Alkyl, -Aryl oder -Alkylaryl,
n+m+2 = 10 bis 85,
m = 0 bis 20,
x = 2 bis 15,
y = 1 bis 40,
z = 0 bis 1
wobei die Bausteine (CH₂-CHR'-O) gleich oder unterschiedlich sein können,
mit der Maßgabe, dass für m = 0 mindestens ein Rest R oder R² gleich R¹ ist,
und dass für z=0 gilt, dass x und y = 0 sind und R" mindestens 3 Kohlenstoffatome enthält, wobei bei max. 70 mol-% der Reste R¹ im Siloxan z=0 ist,
oder ein Gemisch davon,
**dadurch gekennzeichnet, dass** im Mittel (Zahlenmittel, gemittelt über alle Verbindungen der Formel (I)) von 10 bis 90 mol-% der Reste R" keine Wasserstoffreste, sondern vorzugsweise -(CO)-R"', -(CO)-NH-R"' oder - Alkyl, bevorzugt C₁ bis C₄₀-Akylreste und besonders bevorzugt ausschließlich Methylreste, und die verbleibenden Anteile der Reste R" Wasserstoffatome sind, wobei im Mittel m = 0 bis 5, n+m+2 = 10 bis 40, x = 3 und y = 5 bis 25 ist.

2. Polyethersiloxane gemäß Anspruch 1, **dadurch gekennzeichnet, dass** der Quotient Q = (n+m)/m größer-gleich 5 ist.

3. Polyethersiloxane gemäß Anspruch 1 oder 2, **dadurch gekennzeichnet**, **dadurch gekennzeichnet, dass** im Mittel mindestens 75 mol-% und bevorzugt 90 mol-% der Reste R und R² gleich R¹ sind.

4. Polyethersiloxane nach mindestens einem der Ansprüche 1 bis 3, **dadurch gekennzeichnet, dass** im Mittel (Zahlenmittel, gemittelt über alle Verbindungen der Formel (I)) mindestens 50 mol-% der R' = -H sind.

5. Verwendung von Polyethersiloxanen gemäß einem der Ansprüche 1 bis 5, zur oder bei der Herstellung von Polyurethanschaumstoffen oder Polyisocyanuratschaumstoffen.

6. Zusammensetzung, geeignet zur Herstellung von Polyurethan- oder Polyisocyanurat-Hartschaumstoffen, enthaltend zumindest eine Isocyanatkomponenten, zumindest eine Polyolkomponente, zumindest einen Schaumstabilisator, zumindest einen Urethan- und/oder Isocyanurat-Katalysatoren, Wasser und/oder Treibmittel, und optional zumindest ein Flammschutzmittel und/oder weitere Additive, **dadurch gekennzeichnet, dass** als Schaumstabilisator zumindest ein Polyethersiloxan gemäß zumindest einem der Ansprüche 1 bis 4 enthalten ist.

7. Verfahren zur Herstellung von Polyurethan- oder Polyisocyanurat-Hartschaumstoffen, durch Umsetzung einer Zusammensetzung gemäß Anspruch 6.

8. Verfahren nach Anspruch 7, **dadurch gekennzeichnet, dass** dabei Verbundmaterialien und/oder Paneele hergestellt werden.

9. Verfahren nach Anspruch 8, **dadurch gekennzeichnet, dass** der Hartschaumstoff auf eine Deckschicht oder zwischen zwei Deckschichten eingeschäumt wird.

10. Verfahren nach Anspruche 9, **dadurch gekennzeichnet, dass** zumindest eine Deckschicht eine Metall- oder Kunststoffdeckschicht ist.

11. Polyurethan- oder Polyisocyanurat-Hartschaumstoffe, erhältlich durch ein Verfahren gemäß Anspruch 7.

12. Polyurethan- oder Polyisocyanurat-Hartschaumstoffe gemäß Anspruch 11, **dadurch gekennzeichnet, dass** sie von 0,1 bis 10 Massenteile Polyethersiloxan bezogen auf 100 Massenteile Polyolkomponente enthalten.

13. Verwendung von Polyurethan- oder Polyisocyanurat-Hartschaumstoffen gemäß Anspruch 11 oder 12 als Dämmplatten und Isolationsmittel.

14. Kühlapparatur, die einen Polyurethan- oder Polyisocyanurat-Hartschaumstoff gemäß einem der Ansprüche 11 und 12 aufweist.

## Claims

1. Polyether siloxanes of formula (I),
R-Si (CH₃)₂-O-[-Si(CH₃)₂-O-]ₙ-[-Si(CH₃)R¹-O-]ₘ-Si(CH₃)₂-R²
where
R, R¹ and R² are the same or different,
R and/or R² are methyl or R¹,
R¹ in each occurrence is the same or different and represents - (CH₂)ₓ-(O)_{z}-(CH₂-CHR'-O)_{y}-R",
R' in each occurrence is the same or different and represents -H, -CH₃, -CH₂CH₃ or phenyl,
R" in each occurrence is the same or different and represents -H, - (CO) - R"', -(CO)-NH-R"' or -alkyl, R"' in each occurrence is the same or different and represents C₁ to C₄₀-alkyl, -aryl or -alkylaryl,
n + m + 2 = 10 to 85,
m = 0 to 20,
x = 2 to 15,
y = 1 to 40,
z = 0 to 1
where the (CH₂-CHR'-O) units can be the same or different,
with the proviso that for m = 0 at least one R or R² radical is R¹,
and that for z = 0 the requirement is that x and y = 0 and R" contains at least 3 carbon atoms, although z = 0 applies to not more than 70 mol% of the R¹ radicals in the siloxane,
or a mixture thereof,
**characterized in that** on average (number average, averaged over all compounds of formula (I)) from 10 to 90 mol% of the R" radicals are not hydrogen radicals, but preferably -(CO)-R"', -(CO)-NH-R"' or -alkyl, preferably C₁ to C₄₀-alkyl radicals and more preferably exclusively methyl radicals, and the remaining proportions of the R" radicals are hydrogen atoms, wherein on average m = 0 to 5, n + m + 2 = 10 to 40, x = 3 and y = 5 to 25.

2. Polyether siloxanes according to Claim 1, **characterized in that** the quotient Q = (n+m)/m is not less than 5.

3. Polyether siloxanes according to Claim 1 or 2, **characterized in that** on average at least 75 mol% and preferably 90 mol% of the R and R² radicals are R¹.

4. Polyether siloxanes according to at least one of Claims 1 to 3, **characterized in that** on average (number average, averaged over all compounds of formula (I)) at least 50 mol% of the R' radicals are -H.

5. Use of polyether siloxanes according to any one of Claims 1 to 5 for or in the production of polyurethane foams or polyisocyanurate foams.

6. Composition suitable for producing rigid polyurethane or polyisocyanurate foams, containing at least one isocyanate component, at least one polyol component, at least one foam stabilizer, at least one urethane and/or isocyanurate catalyst, water and/or blowing agents, and optionally at least one flame retardant and/or further additives, **characterized in that** at least one polyether siloxane according to at least one of Claims 1 to 4 is present as foam stabilizer.

7. Process for producing rigid polyurethane or polyisocyanurate foams, by reacting a composition according to Claim 6.

8. Process according to Claim 7, **characterized in that** composite materials and/or panels are produced.

9. Process according to Claim 8, **characterized in that** the rigid foam is foamed onto a surfacing layer or in-between two surfacing layers.

10. Process according to Claim 9, **characterized in that** at least one surfacing layer is a metal or plastics surfacing layer.

11. Rigid polyurethane or polyisocyanurate foams obtainable by a process according to Claim 7.

12. Rigid polyurethane or polyisocyanurate foams according to Claim 11, **characterized in that** they contain from 0.1 to 10 parts by mass of polyether siloxane based on 100 parts by mass of polyol component.

13. Use of rigid polyurethane or polyisocyanurate foams according to Claim 11 or 12 as insulation boards and insulants.

14. Cooling apparatus including a rigid polyurethane or polyisocyanurate foam according to either of Claims 11 and 12.

## Revendications

1. Polyéthersiloxanes de formule (I),
R-Si(CH₃)₂-O-[-Si(CH₃)₂-O-]ₙ-[-Si(CH₃)R¹-O-]ₘ-Si(CH₃)₂-R²
où
R, R¹ et R² sont identiques ou différents,
R et/ou R² représente (nt) un groupe méthyle ou R¹, R¹, le même ou différent, représente -(CH₂)ₓ-(O)_{z}-(CH₂-CHR'-O)_{y}-R",
R', le même ou différent, représente -H, -CH₃, - CH₂CH₃, ou le radical phényle,
R", le même ou différent, représente -H, -(CO)-
R"', -(CO)-NH-R"' ou -alkyle,
R"', le même ou différent, représente un groupe alkyle en C₁-C₄₀, aryle en C₁-C₄₀ ou alkylaryle en C₁-C₄₀,
n+m+2 = 10 à 85,
m = 0 à 20,
x = 2 à 15,
y = 1 à 40,
z = 0 à 1
les éléments constitutifs (CH₂-CHR"-O) pouvant être identiques ou différents,
étant entendu que pour m = 0 au moins un radical R ou R² est égal à R¹,
et que pour z = 0 il s'applique que x et y sont = 0 et R" contient au moins 3 atomes de carbone, dans au maximum 70 % en moles des radicaux R¹ dans le siloxane z étant = 0,
ou un mélange de ceux-ci,
caractérisés qu'en moyenne (moyenne en nombre, établie sur la totalité des composés de formule (I)) de 10 à 90 % en moles des radicaux R" ne sont pas des atomes d'hydrogène, mais sont de préférence -(CO)-R"', -(CO)-NH-R"' ou -alkyle, de préférence des radicaux alkyle en C₁-C₄₀ et de façon particulièrement préférée exclusivement des radicaux méthyle, et les quantités restantes des radicaux R" sont des atomes d'hydrogène, en moyenne m valant de 0 à 5, n+m+2 valant de 10 à 40, x valant 3 et y valant de 5 à 25.

2. Polyéthersiloxanes selon la revendication 1, **caractérisés en ce que** le quotient Q = (n+m)/m est égal ou supérieur à 5.

3. Polyéthersiloxanes selon la revendication 1 ou 2, **caractérisés en ce qu'**en moyenne au moins 75 % en moles et de préférence 90 % en moles des radicaux R et R² sont identiques à R¹.

4. Polyéthersiloxanes selon au moins l'une quelconque des revendications 1 à 3, **caractérisés en ce qu'**en moyenne (moyenne en nombre, établie sur la totalité des composés de formule (I)) au moins 50 % en moles des radicaux R' représentent -H.

5. Utilisation de polyéthersiloxanes selon l'une quelconque des revendications 1 à 5, pour ou dans la production de mousses de polyuréthane ou de mousses de polyisocyanurate.

6. Composition, appropriée à la production de mousses rigides de polyuréthane ou polyisocyanurate, contenant au moins un composant isocyanate, au moins un composant polyol, au moins un stabilisant de mousse, au moins un catalyseur d'uréthane et/ou un catalyseur d'isocyanurate, de l'eau et/ou un agent porogène, et en option au moins un agent ignifuge et/ou d'autres additifs, **caractérisée en ce qu'**en tant que stabilisant de mousse est contenu au moins un polyéthersiloxane selon au moins l'une quelconque des revendications 1 à 4.

7. Procédé pour la production de mousses rigides de polyuréthane ou polyisocyanurate, par mise en réaction d'une composition selon la revendication 6.

8. Procédé selon la revendication 7, **caractérisé en ce que** dans ce procédé on produit des matériaux composites et/ou des panneaux.

9. Procédé selon la revendication 8, **caractérisé en ce qu'**on applique en mousse la mousse rigide sur une couche de recouvrement ou entre deux couches de recouvrement.

10. Procédé selon la revendication 9, **caractérisé en ce qu'**au moins une couche de recouvrement est une couche de recouvrement en métal ou matière plastique.

11. Mousses rigides de polyuréthane ou polyisocyanurate, pouvant être obtenues par un procédé selon la revendication 7.

12. Mousses rigides de polyuréthane ou polyisocyanurate selon la revendication 11, **caractérisées en ce qu'**elles contiennent de 0,1 à 10 parties en masse de polyéthersiloxane par rapport à 100 parties en masse de composant polyol.

13. Utilisation de mousses rigides de polyuréthane ou polyisocyanurate selon la revendication 11 ou 12, en tant que plaques isolantes et moyens d'isolation.

14. Appareil frigorifique, qui comporte une mousse rigide de polyuréthane ou polyisocyanurate selon l'une quelconque des revendications 11 et 12.
